# EUROPEAN PATENT SPECIFICATION

(11) **EP 1 547 713 B1**
(45) Date of publication and mention of the grant of the patent: **11.01.2012**
(21) Application number: 04021782.0
(22) Date of filing: 26.04.1999
(51) Int. Cl.: B23D 59/02, B28D 1/04, B27G 19/02

(54) **An electric cutter with water-cooled disk**
Elektrisch angetriebene Schneidmaschine mit wassergekühltem Schneidblatt
Machine de coupe électrique à lame de coupe refroidie par eau

(30) Priority: 07.05.1998 IT BO980291
(43) Date of publication of application: 29.06.2005
(62) Divisional of application: 99107406.3
(73) Proprietor: S.K.C. di Tondini Claudio, 48010 Cotignola (RA) (IT)
(72) Inventor: Tondini, Claudio, 48010 Cotignola (RA) (IT)
(74) Representative: Crugnola, Pietro

(56) References cited:
- EP-A- 0 014 869
- DE-A- 2 060 694
- DE-U1- 29 802 546
- FR-A- 1 242 791
- FR-A- 2 518 918
- GB-A- 826 194
- US-A- 2 972 344
- US-A- 3 568 377
- US-A- 4 414 783
- US-A- 4 619 081
- US-A- 4 676 557
- US-A- 5 129 300

## Description

The present invention relates to an electric cutter with water-cooled disk.

Cutting tables for tiles or the like above which a longitudinal horizontal guide is mounted are known as electric cutters; a carriage is mounted so that it can slide along the guide, and a motor assembly, which supports a cutting disk, is associated with said carriage so as to oscillate on a horizontal transverse axis.

Work with certain materials entails the use of disks whose cutting edge must be kept constantly clean and cool by means of a jet of water; accordingly, and also in order to reduce the danger of workplace accidents, the disk is protected by a housing which is usually rigidly fixed to the casing of the motor assembly.

US-A-2 972 344 discloses an electric cutter according to the preamble of claim 1.

An object of the present invention is to provide an electric cutter comprising a disk housing with a water-cooled disk cooling which is easy to assemble and not noisy in use, reduces outward water.

Another object of the present invention is to provide a structure which is simple, relatively easy to provide in practice, safe in use, effective in operation and relatively of low cost.

According to the invention, there is provided an electric cutter with a water-cooled disk as defined in claim 1.

Preferred embodiments of the invention are disclosed by the dependent claims.

Further characteristics and advantages of the present invention will become apparent from the following detailed description of a preferred but not exclusive embodiment of an electric cutter with water-cooled disk according to the invention, illustrated only by way of non-limitative example in the accompanying drawings, wherein:

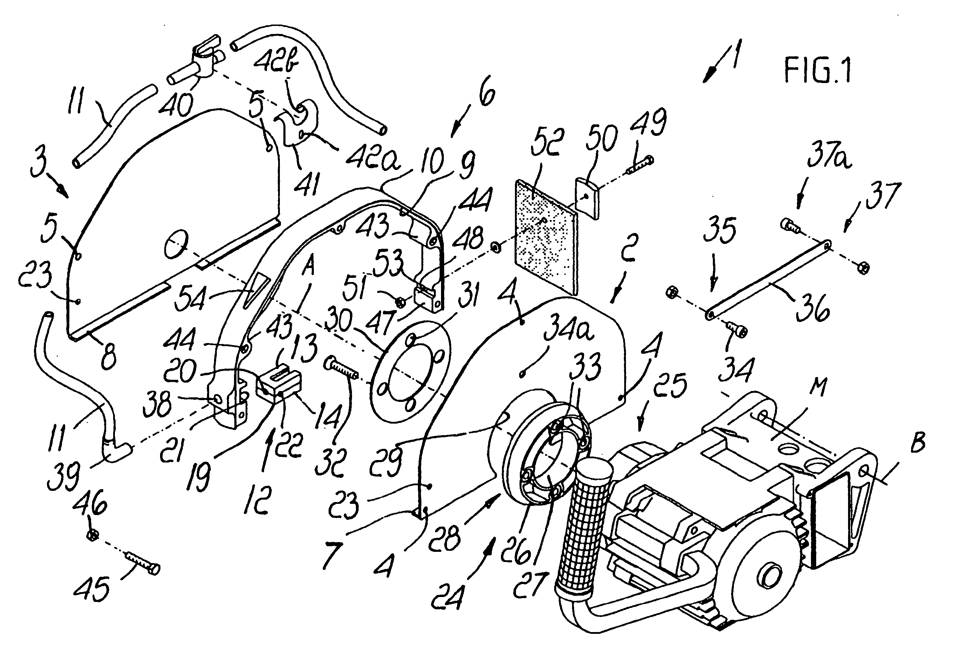

Figure 1 is an exploded perspective view of a disk housing for an electric cutter with water-cooled disk;

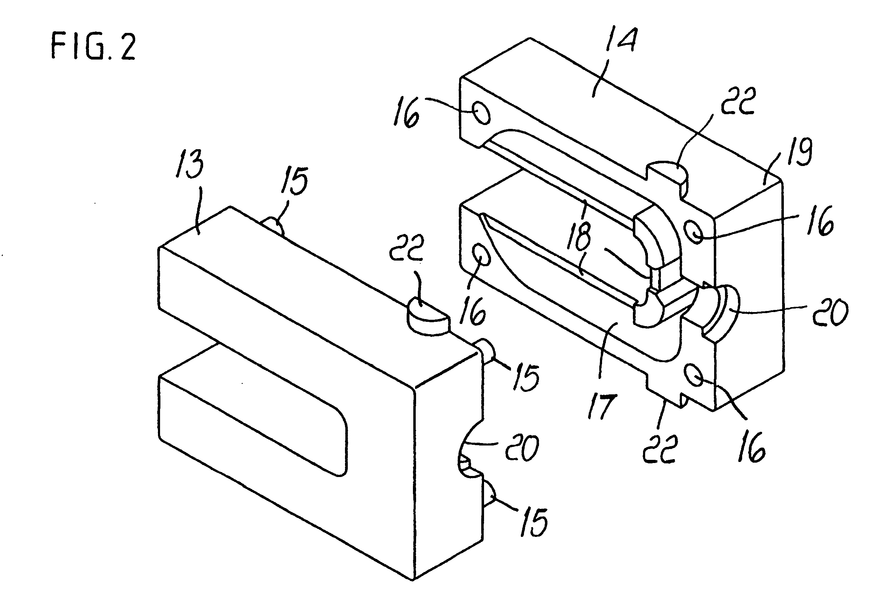

Figure 2 is an enlarged-scale exploded perspective view of the water spray nozzle of the disk housing;

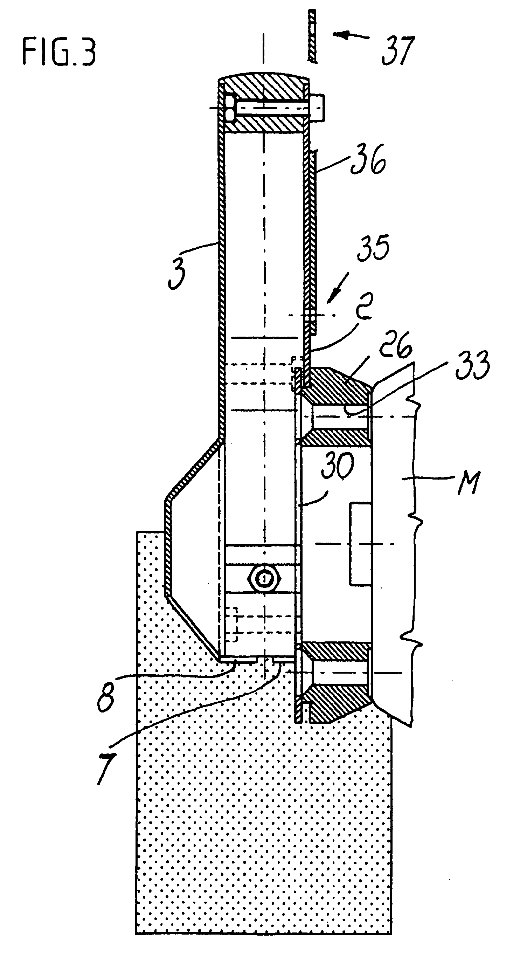

Figure 3 is a partially sectional front view of a disk housing;

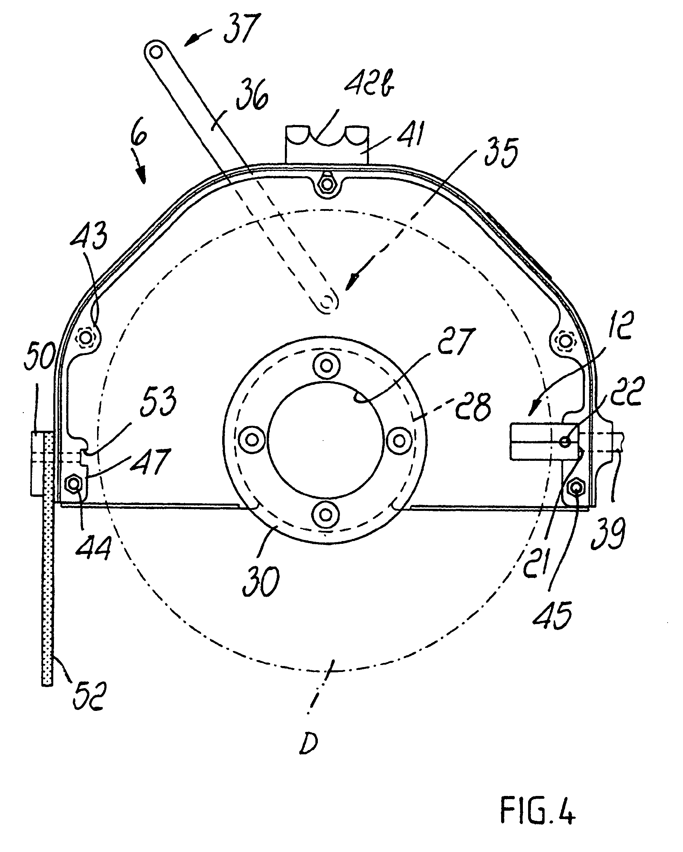

Figure 4 is a side view of a disk housing with a semicircular plates removed;

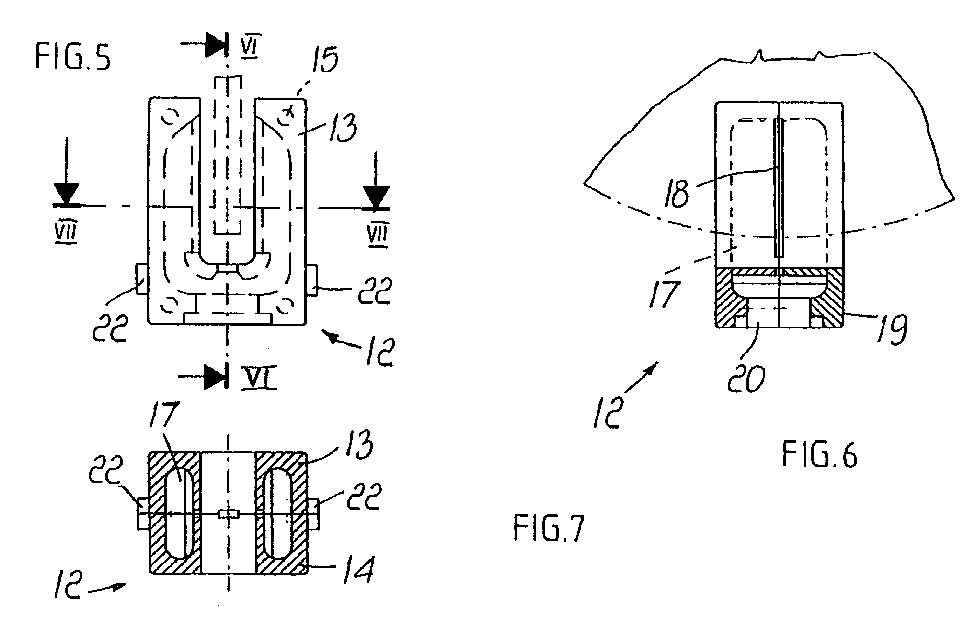

Figure 5 is a top view of the nozzle of Figure 2;
Figure 6 is a sectional side view of the nozzle, taken along the plane VI-VI of Figure 5;
Figure 7 is a sectional front view of the nozzle, taken along the plane VII-VII of Figure 5.

With particular reference to the above Figures, the reference numeral 1 generally designates a disk housing for an electric cutter with water-cooled disk blade according to the invention. The disk housing 1 comprises two symmetrical semicircular plates 2, 3 which are peripherally provided with holes in mutually different positions; the first semicircular plate has three holes 4, while the second semicircular plate has two holes 5; said holes are meant for screws for fixing to the two faces of a perimetric support 6, and the semicircular plates are arranged parallel to each other and form, together with the support, a sort of flat box.

The semicircular plates 2, 3 are substantially shaped like half of a regular polygon and have, at the diagonal from which the cutting disk blade D protrudes, respective edges 7 and 8 which are folded inward: the perimetric support 6, which is advantageously formed by molding materials such as the plastics known by the trade-name Nylon, has, on its two faces, respective external ridges 9 and 10 for the interlock coupling of the polygonal edges of the semicircular plates 2, 3.

The perimetric support 6 is provided with interlock coupling means for a water supply duct 11 and for a nozzle 12 for spraying water onto the disk blade.

The nozzle 12 is substantially fork-shaped in order to wrap around the disk and has water passage openings which are directed toward the inside of its prongs. The nozzle 12 is produced by molding materials such as the plastics known by the trade-name Nylon and is constituted by two symmetrical half-shells 13 and 14 which are fork-shaped and can be coupled together by interlocking through the insertion of corresponding pins 15 in corresponding holes 16; passage ducts 17 and water spray openings 18 are formed in the mutually contacting surfaces of the half-shells 13 and 14.

The means for coupling the nozzle to the support are of the type with a tenon 19 for the base of the nozzle, which is crossed by a central hole 20 for the passage of water, and with a mortise 21 formed in the support. In order to lock the nozzle there are provided two mutually apposite pins 22 which protrude from the nozzle, one half of said pins being formed in the half-shell 13 and the other half being formed in the half-shell 14, said pins fitting in corresponding holes 23 of the semicircular plates. It is noted that the nozzle wraps around the cutting edge of the disk blade and that water is sprayed from all sides by means of three spraying points directly toward said disk blade; it is also noted that the nozzle can be easily disassembled and can then be opened, since it is formed by two half-shells, in order to rapidly clean the water passage ducts and openings.

The semicircular plate 2 is provided with means 24 for hermetic rotary coupling to the head 25 of the motor M that drives the disk blade; the coupling means 24 comprise a flared spacer 26 which is centrally crossed by a hole 27 for the passage of the driving shaft. The spacer 26 has, on one face, an annular indent 28 which snugly and rotatably fits in an opening 29 of the semicircular plate 2. The reference numeral 30 designates an annular washer which is crossed by four holes 31 which are distributed in an annular pattern and in which corresponding screws 32 can be inserted. Such screws 32 pass through corresponding holes 33 of the spacer 26 and screw into respective threaded holes of the head 25 of the motor; the coupling means 24 allow the disk blade housing assembly to oscillate about the axis A of the shaft of the motor of the tile cutter.

An articulation pivot 34 for the end 35 of a metal arm 36 is screwed into a hole 34a of the semicircular plate 2; the other end 37 of the metal arm is meant to be articulated, by means of a pivot 37a, to the elements that support the disk blade driving motor, and such arm is meant to cause a coupling of the articulated-parallelogram type in order to turn the disk blade housing when the disk blade driving motor is made to oscillate in a known manner about an axis B in order to keep the disk blade covered in a safe configuration.

The support has, at the mortise for coupling the nozzle to the support and toward the outside, a through hole 38 for the hermetic coupling of a 90° coupling 39 for connection to the duct 11. The duct 11 is controlled by a cock 40, which is advantageously fitted to the disk housing 2 by means of a U-shaped element 41 which has a small hole 42a for fixing to one of the screws of the holes 4 and a wide opening 42b for the passage of the wings of the cock 40.

In the support 6, at the regions affected by the holes 4 and 5 of the semicircular plates, there are provided thicker regions 43 which are crossed by holes 44 for the screws 45 for fixing the semicircular plates; the preferably hexagonal heads of the screws 45 are recessed in corresponding hexagonal seats formed at one of the two ends of the holes 44, while a lock nut 46, preferably of the self-locking type, is screwed at the free ends of the screws, after positioning the respective semicircular plate.

On the opposite side of the support with respect to the one where the nozzle is fixed, the thicker region continues with a portion 47 crossed by a hole 48 which is arranged radially with respect to the half-disk and is meant to accommodate a screw 49 for fixing, by means of a reinforcement plate 50 and a nut 51, a spray guard flap 52 made of a spongy material suitable to absorb sprays. Advantageously, the portion 47 has a notch 53 for the rotation-preventing coupling of the hexagonal head of the screw 49 or rather of the corresponding nut 51.

Conveniently, on the exposed surface of the support 6 there is an arrow 54 which is formed in relief and indelibly indicates the direction of rotation of the cutting disk blade.

The invention thus conceived is susceptible of numerous modifications and variations within the scope of the invention as defined by the claims.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric cutter comprising:
- a disk housing (1) for a water cooled disk blade (D);
- a motor (M) for driving said disk blade (D) about a rotation axis (A);
- an arm (36) having a first end (35) articulated to said disk housing (1) and a second end (37) articulated to a supporting element supporting said motor (M), said arm (36) turning said disk housing (1) in order to keep said disk blade (D) in a safe configuration, when said motor (M) is caused to oscillate;
- a nozzle (12) for spraying water onto said disk blade (D); and
- interlock coupling means for coupling said nozzle (12) to said disk housing (1);
**characterized in that** said nozzle (12) comprises two half-shells (13, 14) connectable to each other, passage ducts (17) and water spray openings (18) being formed in mutually contacting surfaces of said half-shells (13, 14).

2. An electric cutter according to claim 1, and further comprising an articulation pivot (34) connecting said first end (35) to said disk housing (1) and a further articulation pivot (37a) connecting said second end (37) to said supporting element so that said arm (36) defines a coupling of the articulated-parallelogram type.

3. An electric cutter according to claim 1, or 2, and further comprising coupling means (24) which allows said disk housing to oscillate about said axis (A).

4. An electric cutter according to claim 3, wherein said coupling means (24) comprises a spacer (26) which is centrally crossed by a hole (27) for passage of a driving shaft of said motor (M).

5. An electric cutter according to claim 4, wherein said spacer (26) has, on a face, an annular indent (28) which snugly and rotatably fits in an opening (29) of said disk housing (1).

6. An electric cutter according to any one of claims 4, or 5, wherein said coupling means (24) further comprises an annular washer (30) which is crossed by holes (31) in which corresponding screws (32) can be inserted, said screws (32) passing through corresponding holes (33) of said spacer (26) and screwing into respective holes of a head (25) of said motor (M).

7. An electric cutter according to claim 6, wherein said interlock coupling means comprises a receptacle (21) formed in said disk housing (1) and so configured as to receive a base portion (19) of said nozzle (12).

8. An electric cutter according to any preceding claim, wherein said interlock coupling means further comprises pins (22) protruding from said nozzle (12) and fitting into corresponding holes (23) obtained in said disk housing (1).

9. An electric cutter according to any preceding claim, wherein said nozzle (12) is substantially forkshaped in order to wrap around said disk blade (D).

10. An electric cutter according to claim 9, wherein said water spay openings (18) are directed towards the inside of prongs of said nozzle (12).

11. An electric cutter according to any one of the preceding claims, wherein said half-shells (13, 14) can be coupled together by interlocking through the insertion of pins (15) into corresponding holes (16).

12. An electric cutter according to any one of the preceding claims, wherein on a part of said disk housing (1) that lies opposite to a further part where said nozzle (16) is fixed there is a thicker portion (47) which is crossed by a hole (48) for a screw (49) for fixing a spray guard flap made of spongy material.

13. An electric cutter according to any preceding claim, wherein on an exposed surface of said disk housing (1) there is an arrow (54) in relief which is suitable to indicate the direction of rotation of said disk blade (D).

## Patentansprüche

1. Ein elektrisches Schneidgerät mit:
- eine Scheibenumhäusung (1) für eine wassergekühlte Scheibenklinge (D);
- einem Motor (M) zum Antreiben der Scheibenklinge (D) um eine Rotationsachse (A);
- einem Arm mit einem ersten Ende (35), das gelenkig mit der Scheibenumhäusung (1) verbunden ist, und einem zweiten Ende (37), das gelenkig mit einem Trageelement verbunden ist, das den Motor (M) trägt, wobei der Arm (36) die Scheibenumhäusung (1) dreht, um die Scheibenklinge (D) in einer sicheren Stellung zu halten, wenn der Motor (M) dazu gebracht wird zu oszillieren;
- einer Düse (12) zum Sprühen von Wasser auf die Scheibenklinge (D); und
- Mitteln für eine verriegelnde Kopplung, um die Düse (12) mit der Scheibenumhäusung (1) zu koppeln;
**dadurch gekennzeichnet, dass** die Düse (12) zwei Halbschalen (13, 14) aufweist, die miteinander verbindbar sind, wobei Durchführungsleitungen (17) und Wasserspritzöffnungen (18) in gegenseitig kontaktierenden Oberflächen der Halbschalen (13, 14) ausgebildet sind.

2. Ein elektrisches Schneidgerät nach Anspruch 1, ferner mit einem Gelenkdrehpunkt (34), der das erste Ende (35) mit der Scheibenumhäusung (1) verbindet, und einem weiteren Gelenkdrehpunkt (37a), der das zweite Ende (37) mit dem Trageelement verbindet, so dass der Arm (36) eine Kopplung in der Art eines gelenkigen Parallelogramms definiert.

3. Ein elektrisches Schneidgerät nach Anspruch 1 oder 2, ferner mit Koppelmitteln (24), die es der Scheibenumhäusung ermöglichen, um die Achse (A) zu oszillieren.

4. Ein elektrisches Schneidgerät nach Anspruch 3, wobei die Koppelmittel (24) einen Abstandshalter (26) aufweisen, der zentral von einem Loch (27) gekreuzt ist, um eine Antriebswelle des Motors (M) hindurchzuführen.

5. Ein elektrisches Schneidgerät nach Anspruch 4, wobei der Abstandshalter (26) auf einer Seite eine ringförmige Vertiefung (28) hat, die eng und drehbar in einer Öffnung (29) der Scheibenumhäusung (1) eingepasst ist.

6. Ein elektrisches Schneidgerät nach einem der Ansprüche 4 oder 5, wobei die Koppelmittel (24) ferner eine ringförmige Scheibe (24) aufweisen, die von Löchern (31) gekreuzt ist, in die entsprechende Schrauben (32) eingesetzt werden können, wobei die Schrauben (32) durch die entsprechenden Löcher (33) des Abstandshalters (26) hindurchführen und in entsprechende Löcher von einem Kopf (25) des Motors (M) geschraubt sind.

7. Ein elektrisches Schneidgerät nach Anspruch 6, wobei die Mittel für eine verriegelnde Kopplung eine Aufnahme (20) aufweisen, die in der Scheibenumhäusung (1) gebildet ist und die dafür ausgestaltet ist, einen Basisabschnitt (19) der Düse (12) aufzunehmen.

8. Ein elektrisches Schneidgerät nach einem der vorhergehenden Ansprüche, wobei die Mittel für eine verriegelnde Kopplung des Weiteren Stifte (22) aufweisen, die von der Düse (12) hervorstehen und in entsprechende Löcher (23) passen, die in der Scheibenumhäusung (1) ausgebildet sind.

9. Ein elektrisches Schneidgerät nach einem der vorhergehenden Ansprüche, wobei die Düse (12) im Wesentlichen wie eine Gabel geformt ist, damit sie um die Scheibenklinge (D) herumreicht.

10. Ein elektrisches Schneidgerät nach Anspruch 9, wobei die Wasserspritzöffnungen (18) auf die Innenseite von Ausläufern der Düse (12) gerichtet sind.

11. Ein elektrisches Schneidgerät nach einem der vorhergehenden Ansprüche, wobei die Halbschalen (13, 14) miteinander gekoppelt werden können, indem man sie durch das Einführen von Stiften (15) in entsprechende Löcher (16) verriegelt.

12. Ein elektrisches Schneidgerät nach einem der vorhergehenden Ansprüche, wobei sich auf einem Teil der Scheibenumhäusung (1), der gegenüber von einem weiteren Teil liegt, wo die Düse (12) befestigt ist, ein dicker Abschnitt (47) befindet, der von einem Loch (48) für eine Schraube (49) gekreuzt wird, um einen Spritzschutzlappen zu befestigen, der aus einem schwammähnlichen Material gefertigt ist.

13. Ein elektrisches Schneidgerät nach einem der vorhergehenden Ansprüche, wobei auf einer freiliegenden Oberfläche der Scheibenumhäusung (1) ein Pfeil (54) als Relief vorhanden ist, der dafür geeignet ist, die Richtung der Rotation der Scheibenklinge (D) anzuzeigen.

## Revendications

1. Outil de coupe électrique comprenant :
- un carter (1) de disque pour une lame circulaire (D) refroidie à l'eau ;
- un moteur (M) pour entraîner ladite lame circulaire (D) autour d'un axe de rotation (A) ;
- un bras (36) ayant une première extrémité (35) s'articulant avec ledit carter (1) de disque et une deuxième extrémité (37) s'articulant avec un élément de support supportant ledit moteur (M), ledit bras (36) faisant tourner ledit carter (1) de disque de manière à maintenir ladite larme circulaire (D) dans une configuration sans risques lorsqu'il se produit une oscillation dudit moteur (M) ;
- une buse (12) pour pulvériser de l'eau sur ladite lame circulaire (D) ; et
- des moyens de couplage de verrouillage pour coupler ladite buse (12) audit carter (1) de disque ;
***caractérisé en ce que*** ladite buse (12) comprend deux demi-coques (13, 14) qui peuvent être raccordées l'une à l'autre, des conduits (17) de passage et des ouvertures (18) de pulvérisation d'eau étant formés dans des surfaces mutuellement en contact desdites demi-coques (13, 14).

2. Outil de coupe électrique selon la revendication 1, et comprenant en outre un pivot d'articulation (34) reliant ladite première extrémité (35) audit carter (1) de disque et un pivot d'articulation supplémentaire (37a) reliant ladite deuxième extrémité (37) audit élément de support de telle sorte que ledit bras (36) définisse un couplage de type à parallélogramme articulé.

3. Outil de coupe électrique selon la revendication 1 ou 2, et comprenant en outre des moyens de couplage (24) qui permettent audit carter de disque d'osciller autour dudit axe (A).

4. Outil de coupe électrique selon la revendication 3, dans lequel lesdits moyens de couplage (24) comprennent un élément d'écartement (26) qui est traversé centralement par un trou (27) destiné au passage d'un arbre d'entrainement dudit moteur (M).

5. Outil de coupe électrique selon la revendication 4, dans lequel ledit élément d'écartement (26) possède, sur une face, une empreinte annulaire (28) qui s'ajuste avec frottement doux et rotativement dans une ouverture (29) dudit carter (1) de disque.

6. Outil de coupe électrique selon l'une quelconque des revendications 4 ou 5, dans lequel lesdits moyens de couplage (24) comprennent en outre une rondelle annulaire (30) qui est traversée par des trous (31) dans lesquels peuvent être insérées des vis correspondantes (32), lesdites vis (32) traversant des trous correspondants (33) dudit élément d'écartement (26) et se vissant dans des trous respectifs d'une tête (25) dudit moteur (M).

7. Outil de coupe électrique selon la revendication 6, dans lequel lesdits moyens de couplage de verrouillage comprennent un réceptacle (21) formé dans ledit carter (1) de disque et configuré de manière à recevoir une portion de base (19) de ladite buse (12).

8. Outil de coupe électrique selon l'une quelconque des revendications précédentes, dans lequel lesdits moyens de couplage de verrouillage comprennent en outre des goupilles (22) faisant saillie de ladite buse (12) et s'insérant dans des orifices correspondants (23) ménagés dans ledit carter (1) de disque.

9. Outil de coupe électrique selon l'une quelconque des revendications précédentes, dans lequel ladite buse (12) est sensiblement en forme de fourche de manière à s'envelopper autour de ladite lame circulaire (D).

10. Outil de coupe électrique selon la revendication 9, dans lequel lesdites ouvertures (18) de pulvérisation d'eau sont orientées vers l'intérieur des branches de ladite buse (12).

11. Outil de coupe électrique selon l'une quelconque des revendications précédentes, dans lequel lesdites demi-coques (13, 14) peuvent être accouplées l'une à l'autre par verrouillage réciproque par insertion de goupilles correspondantes (15) dans des trous correspondants (16).

12. Outil de coupe électrique selon l'une quelconque des revendications précédentes, dans lequel, sur une partie dudit carter (1) de disque qui se trouve à l'opposé d'une autre partie où est fixée ladite buse (16), se trouve une portion (47) plus épaisse qui est traversée par un trou (48) pour une vis (49) destinée à la fixation d'un rabat anti-aspersion fait d'un matériau spongieux.

13. Outil de coupe électrique selon l'une quelconque des revendications précédentes, dans lequel, sur une surface exposée dudit carter (1) de disque, se trouve une flèche (54) en relief qui sert à indiquer le sens de rotation de ladite lame circulaire (D).
